(19) **Europäisches Patentamt**
**European Patent Office**
**Office européen des brevets**

(11) **EP 1 209 850 B1**

(12) **EUROPEAN PATENT SPECIFICATION**

(45) Date of publication and mention
of the grant of the patent:
**04.04.2007 Bulletin 2007/14**

(51) Int Cl.:
*H04L 12/24* (2006.01)

(21) Application number: **00310342.1**

(22) Date of filing: **22.11.2000**

(54) **System and method for network element synchronization**

System und Verfahren zur Synchronisation von Netzelementen

Système et procédé de synchronisation des éléments de réseau

(84) Designated Contracting States:
**DE FR GB**

(43) Date of publication of application:
**29.05.2002 Bulletin 2002/22**

(73) Proprietor: **LUCENT TECHNOLOGIES INC.**
**Murray Hill, New Jersey 07974-0636 (US)**

(72) Inventors:
• **Lockley, Paul**
**Tetbury,**
**Gloucestershire GL8 8EY (GB)**

• **House, Julian**
**Chippenham,**
**Wiltshire SN14 0NQ (GB)**

(74) Representative: **Sarup, David Alexander et al**
**Lucent Technologies EUR-IP UK Ltd**
**Unit 18, Core 3**
**Workzone**
**Innova Business Park**
**Electric Avenue**
**Enfield, EN3 7XB (GB)**

(56) References cited:
**US-A- 5 790 805      US-A- 6 108 782**

**Description**

This invention relates to a telecommunications network comprising a number of physically distributed elements, the performance of which must be monitored. Such a situation arises in the transport network, when multiplexors, regenerators, cross-connectors and similar items of apparatus (collectively Network Elements, NEs) are positioned miles apart, usually with fiber optic connections between them.

In current arrangements, the network is provided with at least one Element Management System (EMS) which sets the time of day in every NE. The object is to synchronize the internal clocks of all NEs to allow the monitoring and maintenance of quality of service in the transport network.

Performance Monitoring (PM) is especially important for customers; since one connection can involve passage across two or even more networks, the operator of each network requires PM as the basis for proper charging; if the call is a high quality call, low performance in one network affects the end user's perception, even though other networks relaying the call provide the required quality. Clearly this is a highly unsatisfactory situation.

PM is usually operated by counting errors in signals, and for any counting feature, accurate timing is required, so all NEs must be accurately synchronized to allow the performance monitoring data from all the NEs in a connection to be correlated. To achieve this all the NEs in a network need to be synchronized within five seconds of each other. A further factor is that in some networks, in some countries, improvement of the current level of network synchronization is a specific requirement.

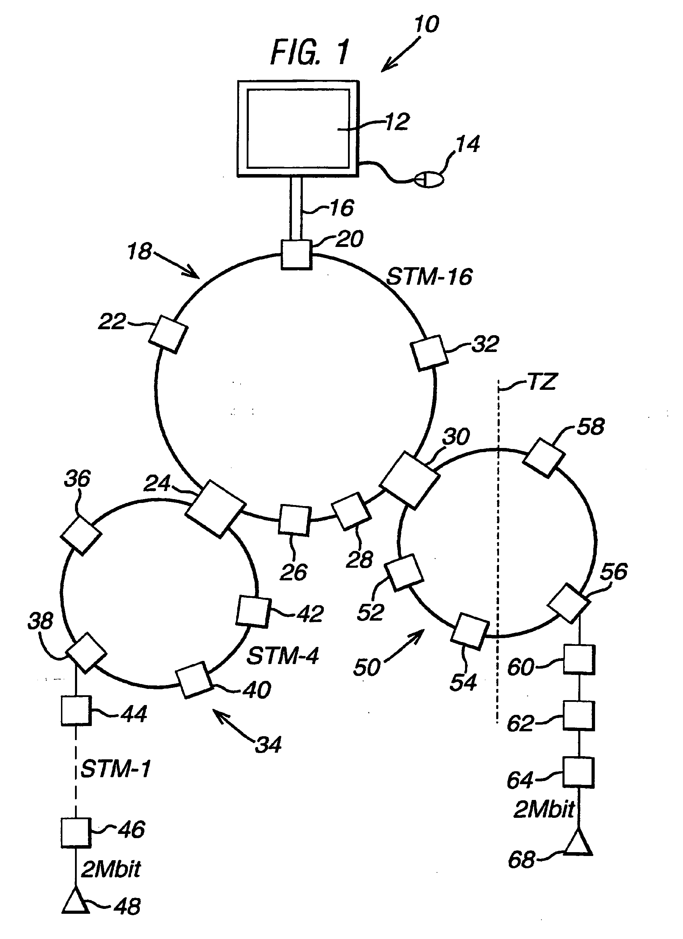

A typical existing network is shown in Figure 1. An EMS 10, shown to have a screen 12 and a mouse control 14, is connected by a Local Area Network (LAN) 16 to one NE 20 of a first ring network 18 consisting of a number of NEs 20, 22, 24, 26, 28, 30, 32 connected in the ring by optical fiber. The network may be a high capacity Synchronous Digital Hierarchy (SDH) network transporting highly multiplexed signals e.g. third order Synchronous Transport Module (STM-16).

The first ring network 18 is connected at NE 24 to a second ring network 34 consisting of NE 24 plus further NEs 38, 40, 42, also interconnected by optical fibers. The second ring network 34 may have a lower capacity, e.g. STM-4.

Connected to NE 38 of the second ring network 34 is a linear connection (shown partly dotted) through NEs 44 and 46 to an end-user 48 for speech or data, the last connection being at 2MBits, with demultiplexing occurring at the NEs before the last link to the user 48. This linear connection may have a lower still capacity, e.g. STM-1.

Connected to NE 30 of the first ring network 18 is a third ring network 50 with NEs 30, 52, 54, 56 and 58. A broken line TZ indicates the boundary of two time zones on the earth's surface, the third ring network 50 spanning the boundary with NEs 30, 52 and 54 being in a first time zone and NEs 56 and 58 being in a second time zone. NE 56 is connected by linear connections through NEs 60, 62, 64 to an end user 68 with demultiplexing appropriately arranged to give a final link at 2MBits.

The overall network is illustrated highly schematically. The network is managed by the EMS 10 which may be an Integrated Transport Management Sub-network Controller (ITM-SC) or a WaveStar Sub Network Management System (WS-SNMS).

All of the NEs in Figure 1 contain a real time clock (RTC). Inevitably, once set, an RTC may drift. ITM-SC sets each RTC once a day; WS-SNMS sets the RTC when the WS-SNMS first begins to manage that NE. Typically an EMS manages two hundred to four hundred NEs. As the NEs can be in different time zones, as indeed can the EMS, each NE's RTC is set to Universal Time Clock (UTC) time. UTC times are only converted to and from local time at the EMS for the user's convenience.

Suppose EMS 10 sends a time-of-day signal; the signal is relayed by NE 20 to all other NEs. The length of the signal path from EMS 10 to NE 46 is clearly substantial, and there is a propagation delay caused by the signal passing through each NE. Further, depending on traffic in the first ring network 18, the signal may be sent in a clockwise direction round the ring, introducing additional path length. Currently, time-of-day signals are sent at 2.10am UTC time, but even if the network is unloaded at this time of day, there may be 20, or even 40 hops from EMS 10 to NE 46. When the relevant part of the network is busy the cumulative delays to a message can result in the message taking significantly longer than 5 seconds to pass from the EMS to an NE such as NE 46. This will result in NE 46 being set to the time that was in the EMS when the message was sent, compared with an NE that is directly connected to the EMS, such as NE 20 that will be set to virtually the same time as the EMS.

A conventional solution would be to apply a Network Timing Protocol (NTP); this would achieve a much higher degree of synchronization than at present, and indeed a higher degree than is necessary, but has a disadvantage that it would have to be implemented not only in the EMS but in all NEs, resulting in extra development time and expense for each of the several different network products involved. This would be difficult to achieve for discontinued NEs where development finished long ago, and for NEs produced by other vendors due to the cooperation and coordination required. The network operator would also have to install new software in every NE which would be a significant logistical exercise.

US-A-5 790 805 discloses client sending a syncronization message to the server, the client receiving a return synchronization message from the server and computing a round-trip internal time between sending and receving, by sampling a local clock.

The present invention provides a system and a method as defined in the independent claims 1 and 7.

It is an object of the invention to provide a method of synchronization of network elements which does not suffer from the disadvantages set out above.

In the accompanying drawings, Figure 1 shows a prior art network. The invention will be described by way of example with reference to figures 2-5 in which:-

Figure 2 illustrates timing inquiries and response messages according to the invention;

Figure 3 illustrates setting a real time clock;

Figure 4 illustrates a subsequent timing inquiry; and

Figure 5 illustrates a typical time synchronization screen on an EMS.

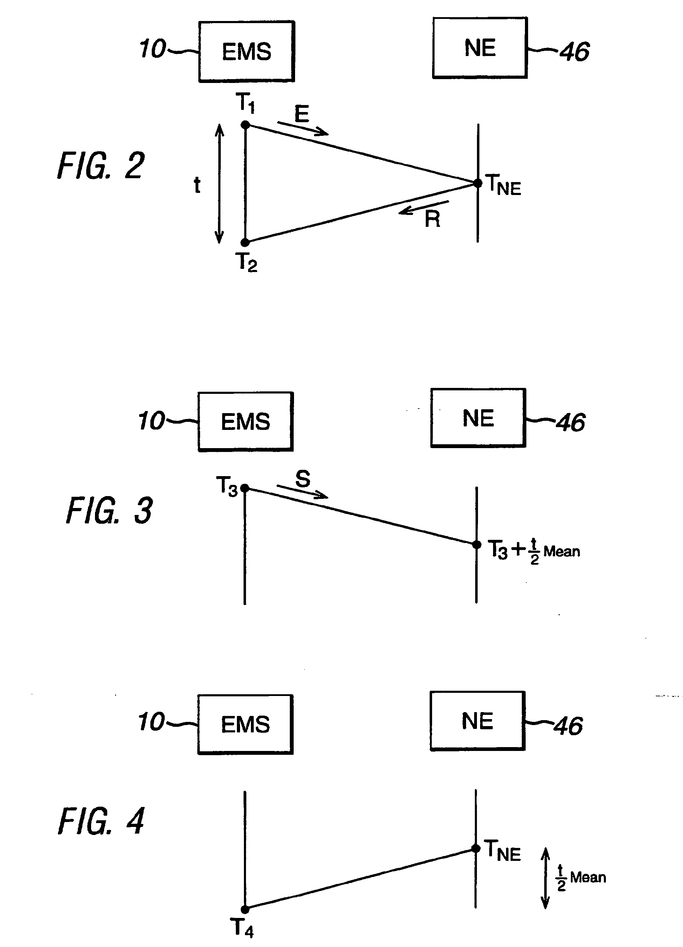

Figure 2 illustrates the EMS 10 and the NE 46. At time $T_1$, the EMS sends a time inquiry message indicated by the arrow E to the NE 46. The NE receives the message and replies by indicating the setting of its RTC (response message R) the time being $T_{NE}$, the response being received by EMS 10 at time $T_2$.
The round trip time $t = T_2 - T_1$ is calculated by the EMS 10. The inquiry message is sent several times by the EMS 10 so that several responses are received and a mean value of t is calculated by the EMS.

For accuracy, the round trip time must be based on the smallest delay time in sending a message between the EMS and the NE, i.e. measured when traffic on the network is low. This is ensured by checking that the mean round trip time is less than the predetermined threshold for each network element

If the mean round trip time exceeds the threshold, the sequence of messages is repeated at a later time when the network may be less busy.

To ensure that the path between the EMS and the NE is stable, i.e. that traffic fluctuations in the network are not causing variations in delay times, the maximum difference in the measured round trip time t is determined. If the maximum difference is within a predetermined range, then the path is indicated as being stable. If the threshold is exceeded, the sequence of messages is repeated at a later time when the network may be less busy and the path may be stable.

If both the mean and the maximum difference of round trip time are within the required limits, the RTC of NE 46 is checked against the central clock in the EMS 10 to determine any drift, from equation 1:-

$$\text{Time drift } = \ T_2 \ - \ (T_{NE} \ + \tfrac{t}{2}) \qquad\qquad (1)$$

The mean time drift is calculated from all the sent and received messages, is checked against a predetermined threshold of a maximum time drift, and if the mean exceeds the threshold then the RTC in NE 46 is reset.

Resetting of the RTC is illustrated in Figure 3. The EMS 10 sends a time set message S, which instructs the NE 46 to reset its RTC to the current time $T_3$ of the central clock in EMS 10, plus half of the mean round trip time.

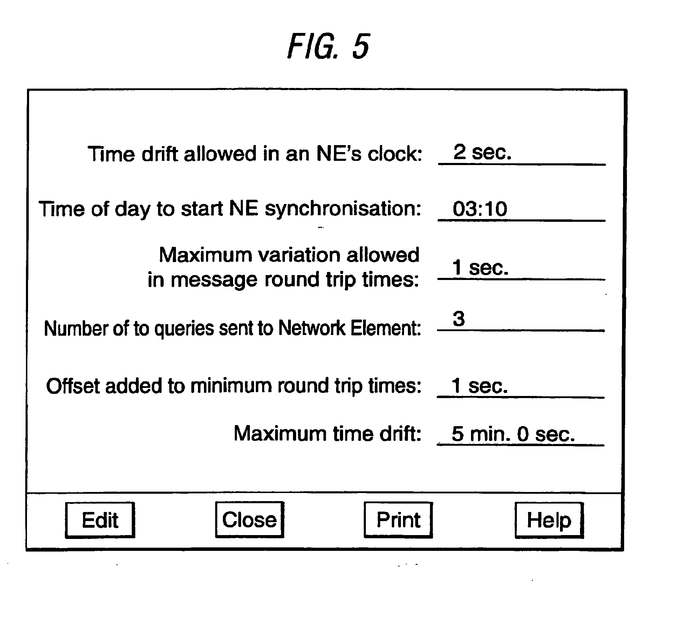

Once the EMS 10 has a record of the mean round trip time to NE 46, subsequent checking of the RTC in NE 46 can be simpler. The EMS 10 requests NE 46 to send its local time. As shown in Figure 4, the time $T_{NE}$ is sent, and takes (mean) to travel to EMS 10, the time then being $T_4$; any drift of the RTC is calculated from equation 2:-

$$\text{Time drift} = T_4 - (T_{NE} + \tfrac{t}{2}\,\text{mean}) \qquad\qquad (2)$$

Any drift is checked against the predetermined threshold, to confirm the RTC has been set correctly.

Figure 5 illustrates a typical screen on EMS 10 for time synchronization, illustrating the variables relating to synchronization of a specific NE.

It is an advantage of the invention that a clock in a network element is set only when necessary; if there is no unacceptable drift, the RTC is not reset. If an NE's clock is changed by more than 10 seconds the PM data becomes invalid and would be lost.

As previously explained, time synchronization is usually performed once every twenty four hours and should be performed when network traffic is low. An EMS may manage two hundred or even four hundred NEs, so the NEs must be checked sequentially to keep the load on the network to a minimum. To minimize the risk of any particular NE always being synchronized when network load has increased substantially from the minimum by a periodic occurrence, the EMS 10 is arranged to start each complete synchronization cycle with a random NE.

A substantial advantage of the invention is that the only network element which needs to be modified is the EMS; all the NEs remain unchanged, including NEs currently in commercial operation.

Further, implementation of the invention allows support of the software emulation of tandem connection monitoring.

By application of the invention giving improved synchronization of network element clocks, with a central clock in an element management system, performance monitoring data are considerably less likely to be corrupted than with prior art arrangements, and quality of service within a complex network, and especially within a network having parts under different operators, can be monitored and maintained more easily than has previously been possible.

## Claims

1. An element management system (10) for a telecommunications network (18, 34, 50) comprising a plurality of network elements (20-32, 36-42, 52-58, 44, 46 and 60-64) each network element comprising a real time clock and the element management system comprising a central clock, **characterized in that** the element management system is arranged to send to a network element (46) a plurality of timed request messages (E) each requesting the time ($T_{NE}$) indicated by the real time clock of the network element (46) the messages being spread in time;
   receiving from the network element responses (R) to the messages and recording the time of receipt of each message;
   determining the round trip time (t) for each request message and the response to it;
   determining a mean round trip time (t mean);
   from the mean round trip time and the time indicated by the real time clock in the network element responses, determining any out-of synchronization between the real time clock and the central clock, and if the out-of-synchronization exceeds a predetermined threshold, resetting the real time clock.

2. An element management system according to Claim 1 arranged to determine whether the mean round trip time (t mean) exceeds a predetermined threshold and, if said threshold is exceeded, sending to the network element a plurality of timed request messages at a subsequent time.

3. An element management system according to Claim 1 or Claim 2 further arranged to determine a maximum difference in round trip times, to determine whether said maximum difference exceeds a predetermined threshold and, if said threshold is exceeded, to send to the network element a plurality of timed request messages at a subsequent time.

4. An element management system according to any preceding claim arranged further to determine for every sent and received message any time drift between the time $T_{NE}$ indicated by the real time clock and the time $T_2$ of the central clock by application of the equation $\text{Time drift} = T_2 - (T_{NE} + \frac{t}{2})$;
   determining a mean time drift;
   comparing the mean time drift with a predetermined threshold and, if said threshold is exceeded, resetting the real time clock.

5. An element management system according to Claim 4 further arranged to reset the real time clock by sending to the clock an instruction to reset to a time comprising the current time of the central clock ($T_3$) + half of the mean round trip time $(\frac{t}{2}\ \text{mean}))$

6. An element management system according to Claim 5 further arranged to receive subsequently from the real time clock a message indicating its time $T_{NE}$, to add to the received time a time equal to half the round trip time, and to check that the real time clock has been set correctly.

7. A method in a telecommunications network of synchronizing the time of a real time clock in a network element with a central clock, **characterized by** the steps of:-

   sending to the network element a plurality of timed request messages (E) each requesting the time ($T_{NE}$) indicated by the real time clock; the messages being spaced in time;
   receiving from the network element responses (R) to the messages and recording the time of receipt of each message;
   determining the round trip time (t) for each request message and the response to it;
   determining a mean round trip time (t mean);

from the mean round trip time and the time indicated by the real time clock in the network element responses, determining any out-of synchronization between the real time clock and the central clock, and if the out-of-synchronization exceeds a predetermined threshold, resetting the real time clock.

**Patentansprüche**

1. Elementverwaltungssystem (10) für ein Telekommunikationsnetz (18, 34, 50) mit mehreren Netzelementen (20-32, 36-42, 52-58, 44, 46 und 60-64), wobei jedes Netzelement einen Echtzeitgeber umfaßt und das Elementverwaltungssystem einen zentralen Zeitgeber umfaßt, **dadurch gekennzeichnet, daß** das Elementverwaltungssystem dafür ausgelegt ist, mehrere zeitgesteuerte Anforderungsnachrichten (E) zu einem Netzelement (46) zu senden, die jeweils die von dem Echtzeitgeber des Netzelements (46) angezeigte Zeit ($T_{NE}$) anfordern, wobei die Nachrichten zeitlich gespreizt sind;
   Empfangen von Antworten (R) von dem Netzelement auf die Nachrichten und Aufzeichnen des Empfangszeitpunkts jeder Nachricht;
   Bestimmen der Umlaufzeit (t) für jede Anforderungsnachricht und die Antwort auf sie;
   Bestimmen einer mittleren Umlaufzeit (t mittel);
   Bestimmen einer etwaigen Unsynchronisiertheit zwischen dem Echtzeitgeber und dem zentralen Zeitgeber aus der mittleren Umlaufzeit und der von dem Echtzeitgeber angezeigten Zeit in den Netzelementantworten, und wenn die Unsynchronisiertheit eine vorbestimmte Schwelle übersteigt, Rücksetzen des Echtzeitgebers.

2. Elementverwaltungssystem nach Anspruch 1, das dafür ausgelegt ist, zu bestimmen, ob die mittlere Umlaufzeit (t mittel) eine vorbestimmte Schwelle übersteigt, und, wenn die Schwelle überstiegen wird, zu einem nachfolgenden Zeitpunkt mehrere zeitgesteuerte Anforderungsnachrichten zu dem Netzelement zu senden.

3. Elementverwaltungssystem nach Anspruch 1 oder Anspruch 2, das ferner dafür ausgelegt ist, eine maximale Differenz der Umlaufzeiten zu bestimmen, zu bestimmen, ob die maximale Differenz eine vorbestimmte Schwelle übersteigt, und, wenn die Schwelle überstiegen wird, zu einem nachfolgenden Zeitpunkt mehrere zeitgesteuerte Anforderungsnachrichten zu dem Netzelement zu senden.

4. Elementverwaltungssystem nach einem der vorhergehenden Ansprüche, das ferner dafür ausgelegt ist, für jede gesendete und empfangene Nachricht eine etwaige Zeitdrift zwischen der von dem Echtzeitgeber angezeigten Zeit $T_{NE}$ und der Zeit $T_2$ des zentralen Zeitgebers durch Anwenden der

$$\text{Gleichung Zeitdrift} = T_2 - (T_{NE} + \frac{t}{2})$$ zu bestimmen;

   Bestimmen einer mittleren Zeitdrift;
   Vergleichen der mittleren Zeitdrift mit einer vorbestimmten Schwelle, und, wenn die Schwelle überstiegen wird, Rücksetzen des Echtzeitgebers.

5. Elementverwaltungssystem nach Anspruch 4, das ferner dafür ausgelegt ist, den Echtzeitgeber rückzusetzen, indem eine Anweisung zu dem Zeitgeber gesendet wird, auf eine Zeit rückzusetzen, die die aktuelle Zeit des zentralen Zeitgebers ($T_3$) + die Hälfte der mittleren Umlaufzeit ($\frac{t}{2}$ mittel) umfaßt.

6. Elementverwaltungssystem nach Anspruch 5, das ferner dafür ausgelegt ist, nachfolgend von dem Echtzeitgeber eine seine Zeit $T_{NE}$ anzeigende Nachricht zu empfangen, eine Zeit gleich der Hälfte der Umlaufzeit zu der empfangenen Zeit zu addieren und zu prüfen, daß der Echtzeitgeber korrekt gesetzt wurde.

7. Verfahren in einem Telekommunikationsnetz zum Synchronisieren der Zeit eines Echtzeitgebers in einem Netzelement mit einem zentralen Zeitgeber, **gekennzeichnet durch** die folgenden Schritte:

   Senden mehrerer zeitgesteuerter Anforderungsnachrichten (E) zu dem Netzelement, die jeweils die von dem Echtzeitgeber angezeigte Zeit ($T_{NE}$) anfordern, wobei die Nachrichten zeitlich beabstandet sind;
   Empfangen von Antworten (R) von dem Netzelement auf die Nachrichten und Aufzeichnen des Empfangszeitpunkts jeder Nachricht;
   Bestimmen der Umlaufzeit (t) für jede Anforderungsnachricht und die Antwort auf sie;

Bestimmen einer mittleren Umlaufzeit (t mittel);

Bestimmen einer etwaigen Unsynchronisiertheit zwischen dem Echtzeitgeber und dem zentralen Zeitgeber aus der mittleren Umlaufzeit und der von dem Echtzeitgeber angezeigten Zeit in den Netzelementantworten, und wenn die Unsynchronisiertheit eine vorbestimmte Schwelle übersteigt, Rücksetzen des Echtzeitgebers.

## Revendications

1. Système de gestion d'éléments (10) pour un réseau de télécommunications (18, 34, 50) comprenant une pluralité d'éléments de réseau (20 à 32, 36 à 42, 52 à 58, 44, 46 et 60 à 64), chaque élément de réseau comprenant une horloge en temps réel et le système de gestion d'éléments comprenant une horloge centrale, **caractérisé en ce que** le système de gestion d'éléments est agencé pour envoyer à un élément de réseau (46) une pluralité de messages de demande temporisés (E) demandant chacun l'heure ($T_{NE}$) indiquée par l'horloge en temps réel de l'élément de réseau (46), les messages étant étalés dans le temps ;

recevant de l'élément de réseau des réponses (R) aux messages et enregistrant l'heure de réception de chaque message ;

déterminant le temps de propagation aller-retour (t) de chaque message de demande et de la réponse à celui-ci ;

déterminant un temps de propagation aller-retour moyen (t moyen) ;

à partir du temps de propagation aller-retour moyen et de l'heure indiquée par l'horloge en temps réel dans les réponses de l'élément de réseau, déterminant toute désynchronisation entre l'horloge en temps réel et l'horloge centrale, et si la désynchronisation dépasse un seuil prédéterminé, réajustant l'horloge en temps réel.

2. Système de gestion d'éléments selon la revendication 1, agencé pour déterminer si le temps de propagation aller-retour moyen (t moyen) dépasse un seuil prédéterminé et, si ledit seuil est dépassé, envoyant à l'élément de réseau une pluralité de messages de demande temporisés à un temps ultérieur.

3. Système de gestion d'éléments selon la revendication 1 ou la revendication 2, agencé en outre pour déterminer une différence maximum des temps de propagation aller-retour, déterminer si ladite différence maximum dépasse un seuil prédéterminé et, si ledit seuil est dépassé, envoyer à l'élément de réseau une pluralité de messages de demande temporisés à un temps ultérieur.

4. Système de gestion d'éléments selon l'une quelconque des revendications précédentes, agencé en outre pour déterminer pour chaque message envoyé et reçu toute dérive temporelle entre l'heure $T_{NE}$ indiquée par l'horloge en temps réel et l'heure $T_2$ de l'horloge centrale par l'application de l'équation $\texttt{Dérive}$

$$\texttt{temporelle = } T_2 - (T_{NE} + \frac{t}{2}) \texttt{ ;}$$

déterminant une dérive temporelle moyenne ;

comparant la dérive temporelle moyenne à un seuil prédéterminé, et, si ledit seuil est dépassé, réajustant l'horloge en temps réel.

5. Système de gestion d'éléments selon la revendication 4, agencé en outre pour réajuster l'horloge en temps réel en envoyant à l'horloge une instruction de se réajuster sur un temps comprenant l'heure actuelle de l'horloge centrale ($T_3$) + la moitié du temps de propagation aller-retour moyen $(\frac{t}{2} \texttt{ moyen})$.

6. Système de gestion d'éléments selon la revendication 5, agencé en outre pour recevoir ultérieurement de l'horloge en temps réel un message indiquant son heure $T_{NE}$, pour ajouter à l'heure reçue un temps égal à la moitié du temps de propagation aller-retour, et vérifier que l'horloge en temps réel a été réglée correctement.

7. Procédé dans un réseau de télécommunications de synchronisation du temps d'une horloge en temps réel dans un élément de réseau avec une horloge centrale, **caractérisé par** les étapes consistant à :

envoyer à l'élément de réseau une pluralité de messages de demande temporisés (E) demandant chacun l'heure ($T_{NE}$) indiquée par l'horloge en temps réel, les messages étant espacés dans le temps ;

recevoir de l'élément de réseau des réponses (R) aux messages et enregistrer l'heure de réception de chaque message ;
déterminer le temps de propagation aller-retour (t) de chaque message de demande et de la réponse à celui-ci ;
déterminer un temps de propagation aller-retour moyen (t moyen) ;
à partir du temps de propagation aller-retour moyen et de l'heure indiquée par l'horloge en temps réel dans les réponses de l'élément de réseau, déterminer toute désynchronisation entre l'horloge en temps réel et l'horloge centrale, et si la désynchronisation dépasse un seuil prédéterminé, réajuster l'horloge en temps réel.

FIG. 1

FIG. 2

FIG. 3

FIG. 4

## FIG. 5

Time drift allowed in an NE's clock: __2 sec.__

Time of day to start NE synchronisation: __03:10__

Maximum variation allowed
in message round trip times: __1 sec.__

Number of to queries sent to Network Element: __3__

Offset added to minimum round trip times: __1 sec.__

Maximum time drift: __5 min. 0 sec.__

| Edit | | Close | | Print | | Help |